# EUROPEAN PATENT SPECIFICATION

(11) **EP 2 660 143 B1**
(45) Date of publication and mention of the grant of the patent: **07.07.2021**
(21) Application number: 12305484.3
(22) Date of filing: 30.04.2012
(51) Int. Cl.: B64C 11/16, B64C 11/20, B64C 27/473

(54) **Propeller blade with lightweight insert and bulkheads**
Propellerblatt mit leichtgewichtigem Einsatz und Schotten
Pale d'hélice avec insert léger et cloisons

(43) Date of publication of application: 06.11.2013
(73) Proprietor: RATIER-FIGEAC, 46100 Figeac (FR)
(72) Inventor: Seminel, Bruno, Lissac-et-Mouret Lot 46100 (FR); Petallaz, Bruno, 46100 Béduer (FR)
(74) Representative: Dehns

(56) References cited:
- FR-A1- 2 381 662
- US-A- 4 295 790
- US-A- 4 696 623
- US-A- 4 806 077
- US-A- 4 935 277
- US-A1- 2010 209 254
- None

## Description

### BACKGROUND OF THE INVENTION

The present invention relates to propellers and, in particular, to propeller blades that include a lightweight insert disposed in them.

Modern propeller blades typically include root portions which extend into the hub arm of the hub of the propeller system and which are secured to and rotatable relative to the hub arm via a retention assembly. Typically the retention assembly includes one or a plurality of ball bearing assemblies which permit the rotation of the blade in the hub arm for accomplishing pitch change of the blade for altering the speed of the propeller and accordingly, the aircraft.

The blades are typically formed by surrounding a foam spar core with a resin impregnated fabric. Leading and trailing edges of the blade are then formed over the fabric and surrounded by, for example, a Kevlar sock. Such blades are light and effective for their intended purposes.

A propeller blade with the features of the preamble to claim 1 is disclosed in US 4,806,077. Other propeller blades are also disclosed in US 2010/0209254 and US 4,295,790.

### BRIEF DESCRIPTION OF THE INVENTION

The present invention provides a propeller blade in accordance with claim 1.

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is a plan-view of a propeller blade according to one embodiment of the present invention;
FIG. 2 is a cross-section of the propeller blade shown in FIG. 1;
FIGs. 3A-3E are side views that illustrate different configurations of an insert that can be provided within the propeller blade shown in FIGs. 1 and 2, the configuration of figure 3D not being covered by the present invention;
FIG. 4 is a perspective view of one embodiment of an insert according to the present invention;
FIG. 5 is a cross-section of a propeller blade that includes two separate inserts in accordance with one embodiment of the present invention; and
FIG. 6 is a plan-view of a propeller blade according to another embodiment of the present invention.

### DETAILED DESCRIPTION OF THE INVENTION

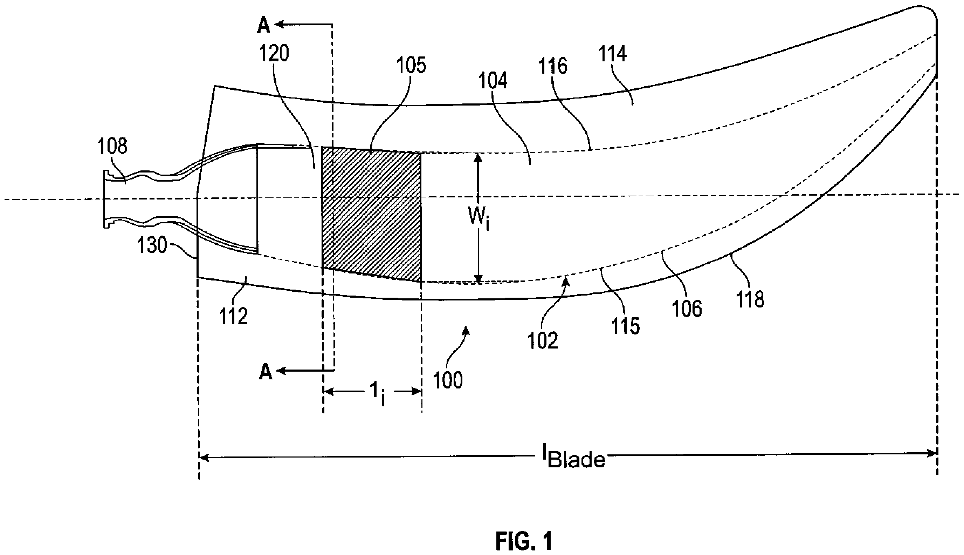

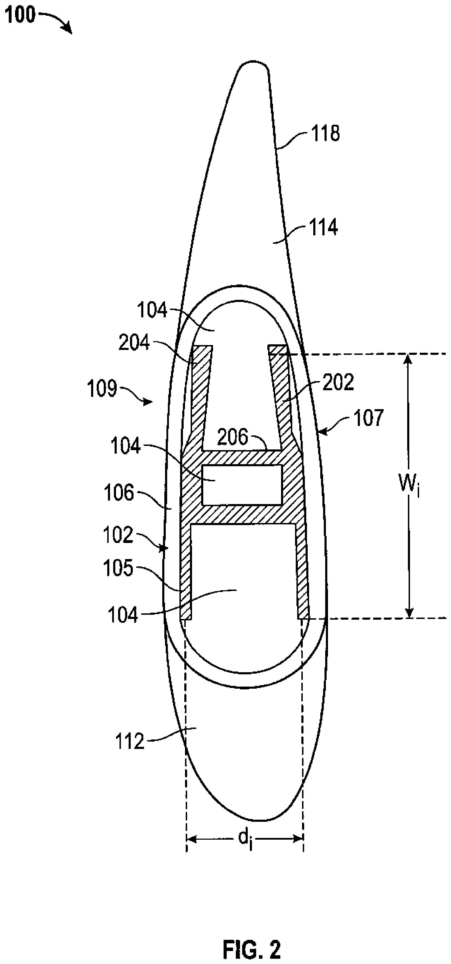

Referring now to FIG. 1, a plan view of a propeller blade 100 according to one embodiment of the present invention is illustrated. Reference will also be made to FIG. 2, which is a cross-section of the propeller blade 100 of FIG. 1 taken along line A-A.

The blade 100 is formed by first forming a spar 102. The spar 102 includes a spar foam core 104 surrounded by a structural layer 106. The core 104 is typically formed of a foam material that is injected into a mold but could also be pre-molded and machined and then inserted into the mold. The mold can include a layer of fiberglass or carbon on the walls thereof to which the foam of the core 104 adheres. As such, the core 104 can be surrounded by a layer of fiberglass or carbon (not shown) in one embodiment but this is not required. The foam that forms the core 104 can be selected from one of: polyurethane (PU), polyisocyanurate, or polymethacrylimide (PMI).

According to one embodiment, an insert 105 can be provided in the mold. In such an embodiment, the foam of the core 104 is disposed within open spaces defined by the insert 105. The foam of the core 104 is also disposed in the remainder of the area of the mold not occupied by the insert 105. The insert 105 can be formed of carbon, fiberglass or any other suitable composite or non-composite material.

The structural layer 106 is typically formed of a fabric material (e.g. a braided carbon material) and disposed such that it surrounds the core 104 (and the fiberglass or carbon layer if it is included). In one embodiment, the structural layer 106 is impregnated with a resin. In some cases, the spar 102 is heated to set the resin in the structural layer 106. It has been discovered that, in some instances, additional structure is required to transfer shear force from the face 107 and camber 109 sides of the blade 100 to prevent foam core 104 cracking., With the inclusion of the insert 105, the face 107 and camber 109 sides (FIG. 2) of the spar 102 in general (and the corresponding face and camber sides of the structural layer 106, in particular) are kept in a fixed relation to one another. As such, the possibility of the core 104 cracking may be reduced.

In some instances, the spar 102 is formed such that a portion of it surrounds a root portion 108 that allows the blade 100 to be connected to a hub (not shown). Rotation of the hub causes the blade 100 to rotate and, consequently, causes the generation of thrust to propel an aircraft. In the following discussion, it shall be assumed that the blade 100 rotates in the clockwise direction. The root portion 108 is sometimes referred to as a "tulip" in the industry and is typically formed of a metal.

After the spar 102 is formed, leading edge foam 112 and trailing edge foam 114 are formed on the leading and trailing edges 115, 116 respectively of the spar 102. The leading edge foam 112, trailing edge foam 114 and the spar 102 are then encased in an outer layer 118. The outer layer 118 can be formed of Kevlar and be in the form of a sock that is pulled over the assembly that includes the leading edge foam 112, trailing edge foam 114 and the spar 102. Of course, the outer layer 118 could be formed in other manners as well.

The insert 105 can take on any number of shapes and, as illustrated in FIGs. 1 and 2 can have a length lᵢ, a width wᵢ, and a depth dᵢ. It shall be understood that depending on the shape and location along length the blade 100, the values wᵢ, and dᵢ will generally vary to conform them to the desired shape of the blade 100. In one embodiment, the length lᵢ spans a portion of the length of the blade 100 that is within the first half of the length l_{blade} of blade 100 measured from the end 130 of the blade 100 where the root 108 is located. Of course, the length lᵢ of the insert 105 can be any length that is less than the length l_{blade} of the blade 100.

In one embodiment, and as best illustrated in FIG. 2, the insert includes a face component 202 and a camber component 204 that generally define the width wᵢ of the insert 105 on the face and camber sides 107, 109 of the blade 100. As illustrated, the face component 202 and the camber component 204 are connected by two cross members 206. Of course, the number of cross members could be varied. As such, the insert 105 can include one or more cross members 206 that connect the face component 202 and the camber component 204. In one embodiment, and as illustrated, the face component 202 and the camber component 204 extend beyond the cross members 206 towards both the leading edge foam 112 and the trailing edge foam 114. Of course, either or both the face component 202 and the camber component 204 could extend beyond the cross members 206 towards only one of the leading edge foam 112 and the trailing edge foam 114 or not at all.

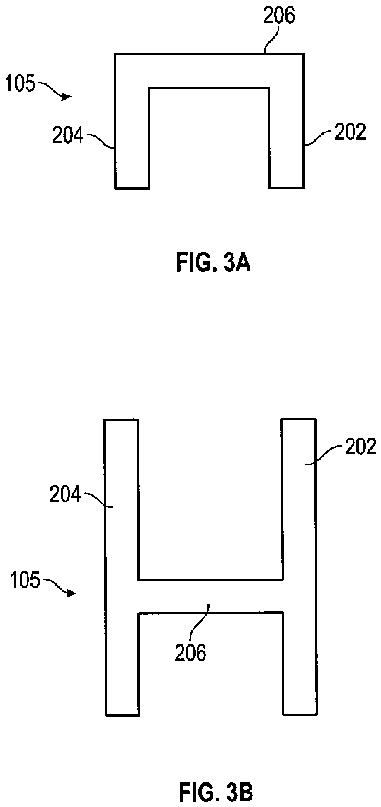

FIGs. 3A-3E illustrate side views of different embodiments of inserts 105 that could be utilized in accordance with the teachings herein. All of the inserts 105 shown in FIGs. 3A-3E include a face component 202 and the camber component 204 and could be disposed in the blade 100 as illustrated in FIGs. 1 and 2 such that the face component 202 contacts the face side 107 of the structural layer 106 and the camber component 204 contacts the camber side 109 of the structural layer 106. The names given the inserts 105 described below may be understood if they are rotated 90 degrees but they are shown in the particular manner to maintain consistency with FIG. 2.

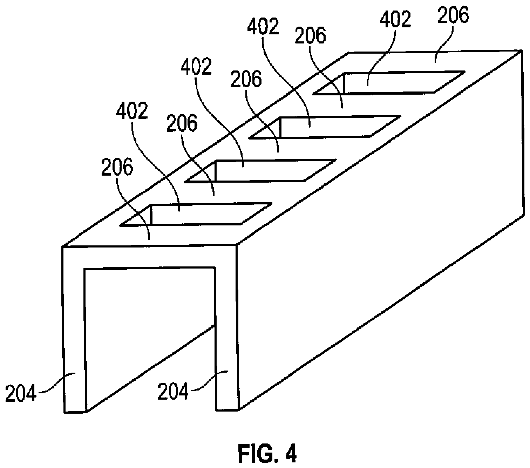

In more detail, FIG. 3A illustrates a c-shaped insert 105 that includes a cross member 206 connecting ends of the face component 202 and the camber component 204. It shall be understood that the cross member 206 of FIG. 3A (as well as any other cross member 206 in any other figure) could be formed as a plurality of substantially co-planar cross-members 206 separated by spaces 402 as is illustrated in FIG. 4.

FIG. 3B illustrates an I-shaped insert 105 that includes a cross member 206 that connects the face component 202 and the camber component 204 at a location that is not at the end of either. As illustrated, the cross member 206 is perpendicular to both the face component 202 and the camber component 204. As one of ordinary skill will readily understand, the cross member 206 could be disposed at other angles relative to one or both of the face component 202 and the camber component 204.

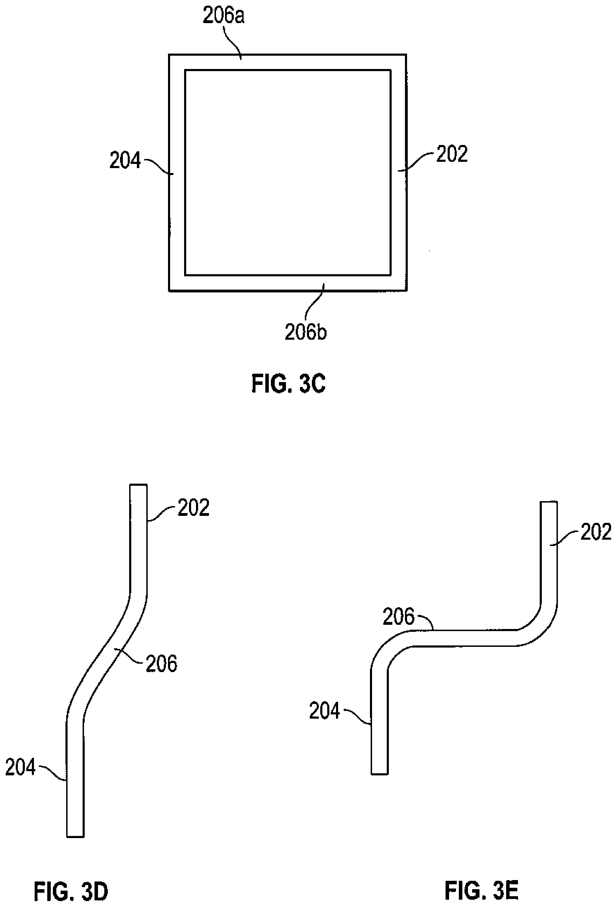

FIG. 3C illustrates a box-shaped insert 105 that includes two cross members 206a and 206b that connect respective ends of the face component 202 and the camber component 204. The insert 105 illustrated in FIG. 3C is similar to that shown in FIG. 2 except that the face component 202 and the camber component 204 do not extend beyond the cross members 206.

FIG. 3D illustrates a z-shaped insert 105, not covered by the invention, that includes a cross member 206 that connects opposite ends of the face component 202 and the camber component 204 together.

FIG. 3E illustrates an s-shaped insert 105 that includes a curved cross member 206 that connects opposite ends of the face component 202 and the camber component 204 together. It shall be understood that one or both of the face component 202 and the camber component 204 could also be curved.

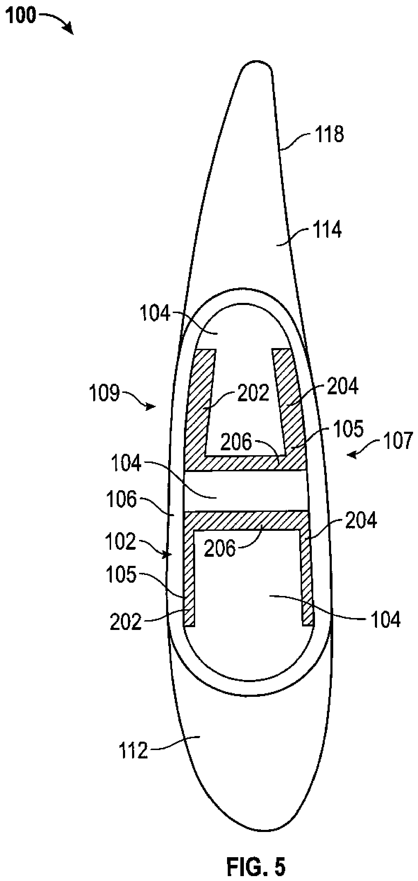

In one embodiment, multiple inserts 105 could be provided within a single blade 100. For example, and with reference to FIG. 5, two c-shaped inserts 105 (FIG. 3A) oriented in opposing directions and disposed within blade 100. As illustrated, the inserts 105 have lengths that cross a single vertical plane. Of course, the inserts 105 could be offset from one another such that no vertical cross section intersects the length of the both inserts (assuming the blade is oriented as shown in FIG. 1).

As discussed above, the inserts 105 disclosed herein can reduce the possibility of the spar core 104 from cracking. In addition, when loads are applied to the blade (e.g., during flight) the inserts 105 disclosed herein can have the effect of preventing one or both of the face side 107 and the camber side 109 bulging outward, reducing the stresses in the blade spar.

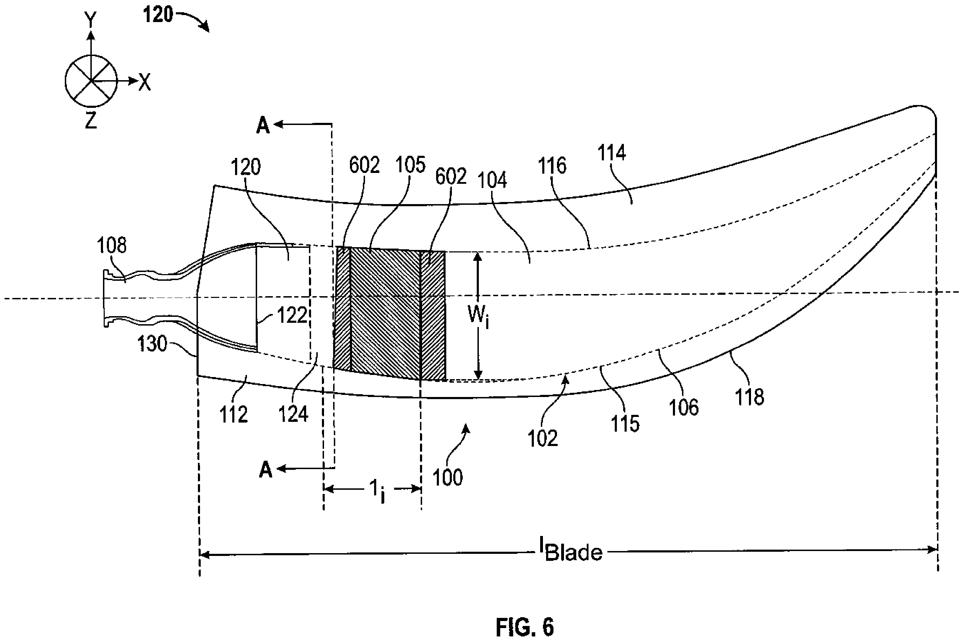

With reference now to FIG. 6, span wise X, chord wise Y and depth Z directions are defined. In all of the embodiments defined above, all of the inserts 105 have been described having a length and a width. The width is the shortest distance between the face and camber components and extends in the depth Z direction when located in blade 100 and the length extends substantially in the span wise X direction. In accordance with the invention, as shown in FIG. 6, one or more bulkheads 602 are disposed at ends of the inserts 105. The bulkheads 602 can be formed in the same or similar manner to the inserts 105 as described above. In contrast, however, the bulkheads 602 have a length that extends in the chord wise Y direction and have a width that extends from the face to the camber sides in the depth Z direction. That is, the bulkheads 602 are arranged at an angle at or about 90 degrees relative to the inserts 105.

The blades 100 shown herein could be formed in many manners. For instance, the spars could be formed and then have portions removed to allow for the inserts and bulkheads to be inserted. In such a case, for instance, a portion of the spar could be removed and then the remaining portions bonded to the inserts/bulkheads that are placed in the portion of the spar that was removed. Then, as described above, the structural layer could be bonded around the combined spar, insert and bulkhead combination.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention.

Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A propeller blade (100) comprising:
a spar (102), wherein the spar (102) includes a foam core (104) and a structural layer (106) that surrounds the foam core (104) and includes a face side (107) and a camber side (109);
an insert (105) disposed in the foam core (104) in operable contact with the face side (107) and the camber side (109) of the structural layer (106) with a length extending substantially in a span wise direction of the propeller blade (100), wherein the insert (105) includes a face component (202) in contact with the face side (107), and a camber component (204) in contact with the camber side (109), the face component (202) and the camber component (204) connected by a cross member (206);
the propeller blade further comprising
a leading edge foam (112) and a trailing edge foam (114) formed on respective leading and trailing edges (115, 116) of the spar (102);
an outer layer (118) encasing the leading edge foam (112), trailing edge foam (114) and the spar (102);
said cross member (206) being substantially perpendicular to the face component (202) and the camber component (204); and
one or more bulkheads (602) disposed in the foam core (104) at an end of the insert (105), having a length that extends in a chord wise direction of the propeller blade (100), such that said one or more bulkheads (602) are oriented normal to the length of the insert (105).

2. The propeller blade of claim 1, further comprising:
a layer of fiberglass or carbon at least partially disposed between the foam core (104) and the structural layer (106).

3. The propeller blade of claim 1 or 2, wherein the cross member (206;206a;206b) is located at ends of one or both of the face component (202) and the camber component (204).

4. The propeller blade of claim 1 or 2, wherein the cross member (206) is located at a location that is not at an end of one or both of the face component (202) and the camber component (204).

5. The propeller blade of claim 1 or 2, wherein the face component (202) and the camber component (204) extend beyond the cross member (206) towards both the leading edge foam (112) and the trailing edge foam (114).

6. The propeller blade of claim 1 or 2, wherein either or both the face component (202) and the camber component (204) extend beyond the cross member (206) towards only one of the leading edge foam (112) and the trailing edge foam (114).

7. The propeller blade of any preceding claim, wherein the insert (105) further includes a second cross member (206b) that connects the face component (202) and the camber component (204) and is separate from the cross member (206a).

8. The propeller blade of any preceding claim, wherein the foam core (204) is formed of one or more of: polyurethane (PU), polyisocyanurate, and polymethacrylimide (PMI).

9. The propeller blade of any preceding claim, wherein the structural layer (106) is formed of a resin-impregnated fiber material.

10. The propeller blade of any preceding claim, wherein the insert (105) is formed of one of: fiberglass, carbon, or a combination thereof, and/or is formed of a composite material.

## Patentansprüche

1. Propellerblatt (100), umfassend:
einen Holm (102), wobei der Holm (102) einen Schaumkern (104) und eine Strukturschicht (106) beinhaltet, die den Schaumkern (104) umgibt und eine Stirnseite (107) und eine Wölbungsseite (109) beinhaltet;
einen Einsatz (105), der in dem Schaumkern (104) in wirksamem Kontakt mit der Stirnseite (107) und der Wölbungsseite (109) der Strukturschicht (106) angeordnet ist, wobei sich eine Länge im Wesentlichen in einer Blattlängenrichtung des Propellerblatts (100) erstreckt, wobei der Einsatz (105) eine Stirnkomponente (202) in Kontakt mit der Stirnseite (107) und eine Wölbungskomponente (204) in Kontakt mit der Wölbungsseite (109) beinhaltet, wobei die Stirnkomponente (202) und die Wölbungskomponente (204) durch ein Querelement (206) verbunden sind;
wobei das Propellerblatt ferner Folgendes umfasst einen Vorderkantenschaum (112) und einen Hinterkantenschaum (114), die an der Vorder- beziehungsweise der Hinterkante (115, 116) des Holms (102) ausgebildet sind;
eine Außenschicht (118), die den Vorderkantenschaum (112), den Hinterkantenschaum (114) und den Holm (102) umschließt;
wobei das Querelement (206) im Wesentlichen senkrecht zur Stirnkomponente (202) und zur Wölbungskomponente (204) ist; und eine oder mehrere Trennwände (602), die in dem Schaumkern (104) an einem Ende des Einsatzes (105) angeordnet sind und eine Länge aufweisen, die sich in einer Blatttiefenrichtung des Propellerblatts (100) erstreckt, so dass die eine oder die mehreren Trennwände (602) lotrecht zu einer Länge des Einsatzes (105) angeordnet sind.

2. Propellerblatt nach Anspruch 1, ferner Folgendes umfassend: eine Schicht aus Fiberglas oder Carbon, die mindestens teilweise zwischen dem Schaumkern (104) und der Strukturschicht (106) angeordnet ist.

3. Propellerblatt nach Anspruch 1 oder 2, wobei das Querelement (206; 206a; 206b) an Enden einer aus der Stirnkomponente (202) und der Wölbungskomponente (204) oder beider angeordnet ist.

4. Propellerblatt nach Anspruch 1 oder 2, wobei das Querelement (206) an einer Stelle angeordnet ist, die nicht an einem Ende einer aus der Stirnkomponente (202) und der Wölbungskomponente (204) oder beider liegt.

5. Propellerblatt nach Anspruch 1 oder 2, wobei sich die Stirnkomponente (202) und die Wölbungskomponente (204) über das Querelement (206) hinaus in Richtung sowohl auf den Vorderkantenschaum (112) als auch den Hinterkantenschaum (114) erstrecken.

6. Propellerblatt nach Anspruch 1 oder 2, wobei sich eine aus der Stirnkomponente (202) und der Wölbungskomponente (204) oder beide über das Querelement (206) hinaus in Richtung nur auf einen aus dem Vorderkantenschaum (112) und dem Hinterkantenschaum (114) erstrecken.

7. Propellerblatt nach einem der vorstehenden Ansprüche, wobei der Einsatz (105) ferner ein zweites Querelement (206b) beinhaltet, das die Stirnkomponente (202) und die Wölbungskomponente (204) verbindet und von dem Querelement (206a) getrennt ist.

8. Propellerblatt nach einem der vorstehenden Ansprüche, wobei der Schaumkern (204) aus einem oder mehreren der Folgenden ausgebildet ist: Polyurethan (PU), Polyisocyanurat und Polymethacrylimid (PMI).

9. Propellerblatt nach einem der vorstehenden Ansprüche, wobei die Strukturschicht (106) aus einem harzgetränkten Fasermaterial ausgebildet ist.

10. Propellerblatt nach einem der vorstehenden Ansprüche, wobei der Einsatz (105) aus einem der Folgenden ausgebildet ist: Fiberglas, Carbon oder eine Kombination davon, und/oder aus einem Verbundmaterial ausgebildet ist.

## Revendications

1. Pale d'hélice (100) comprenant :
un longeron (102), dans laquelle le longeron (102) inclut un noyau en mousse (104) et une couche structurelle (106) qui entoure le noyau en mousse (104) et inclut un côté de face (107) et un côté de cambrure (109) ;
un insert (105) disposé dans le noyau en mousse (104) en contact fonctionnel avec le côté de face (107) et le côté de cambrure (109) de la couche structurelle (106) avec une longueur s'étendant sensiblement dans le sens de l'envergure de la pale d'hélice (100), dans laquelle l'insert (105) inclut un composant de face (202) en contact avec le côté de face (107), et un composant de cambrure (204) en contact avec le côté de cambrure (109), le composant de face (202) et le composant de cambrure (204) étant reliés par un élément transversal (206) ;
la pale d'hélice comprenant en outre
une mousse de bord d'attaque (112) et une mousse de bord de fuite (114) formées sur les bords d'attaque et de fuite (115, 116) respectifs du longeron (102) ;
une couche extérieure (118) enveloppant la mousse de bord d'attaque (112), la mousse de bord de fuite (114) et le longeron (102) ;
ledit élément transversal (206) étant sensiblement perpendiculaire au composant de face (202) et au composant de cambrure (204) ; et
une ou plusieurs cloisons (602) disposées dans le noyau en mousse (104) au niveau d'une extrémité de l'insert (105), ayant une longueur qui s'étend dans le sens de la corde de la pale d'hélice (100), de sorte que lesdites une ou plusieurs cloisons (602) sont orientées de façon perpendiculaire à la longueur de l'insert (105).

2. Pale d'hélice selon la revendication 1, comprenant en outre :
une couche de fibre de verre ou de carbone au moins partiellement disposée entre le noyau en mousse (104) et la couche structurelle (106).

3. Pale d'hélice selon la revendication 1 ou 2, dans laquelle l'élément transversal (206 ; 206a ; 206b) est situé au niveau des extrémités d'un ou des deux du composant de face (202) et du composant de cambrure (204).

4. Pale d'hélice selon la revendication 1 ou 2, dans laquelle l'élément transversal (206) est situé au niveau d'un emplacement qui n'est pas au niveau d'une extrémité d'un ou des deux du composant de face (202) et du composant de cambrure (204).

5. Pale d'hélice selon la revendication 1 ou 2, dans laquelle le composant de face (202) et le composant de cambrure (204) s'étendent au-delà de l'élément transversal (206) à la fois vers la mousse de bord d'attaque (112) et la mousse de bord de fuite (114).

6. Pale d'hélice selon la revendication 1 ou 2, dans laquelle l'un ou l'autre ou les deux du composant de face (202) et du composant de cambrure (204) s'étendent au-delà de l'élément transversal (206) vers une seule de la mousse de bord d'attaque (112) et de la mousse de bord de fuite (114).

7. Pale d'hélice selon une quelconque revendication précédente, dans laquelle l'insert (105) inclut en outre un second élément transversal (206b) qui relie le composant de face (202) et le composant de cambrure (204) et est séparé de l'élément transversal (206a).

8. Pale d'hélice selon une quelconque revendication précédente, dans laquelle le noyau en mousse (204) est formé d'un ou de plusieurs parmi les éléments suivants : polyuréthane (PU), polyisocyanurate et polyméthacrylimide (PMI).

9. Pale d'hélice selon une quelconque revendication précédente, dans laquelle la couche structurelle (106) est formée d'un matériau fibreux imprégné de résine.

10. Pale d'hélice selon une quelconque revendication précédente, dans laquelle l'insert (105) est formé d'un parmi les éléments suivants : fibre de verre, carbone ou une combinaison de ceux-ci, et/ou est formé d'un matériau composite.
